## Europäisches Patentamt

## European Patent Office

## Office européen des brevets

(19)

(11) Veröffentlichungsnummer: **0 004 670**
**B1**

(12)

# EUROPÄISCHE PATENTSCHRIFT

(45) Veröffentlichungstag der Patentschrift:
20.05.81

(51) Int. Cl.³: **C 01 F 7/50**

(21) Anmeldenummer: 79101044.0

(22) Anmeldetag: **05.04.79**

(54) Verfahren zur kontinuierlichen Herstellung von Aluminiumfluorid.

(30) Priorität: **12.04.78 DE 2815881**

(43) Veröffentlichungstag der Anmeldung:
**17.10.79 Patentblatt 79/21**

(45) Bekanntmachung des Hinweises auf die Patenterteilung:
**20.05.81 Patentblatt 81/20**

(84) Benannte Vertragsstaaten:
**BE CH DE FR GB IT NL SE**

(56) Entgegenhaltungen:
**GB-A-1 283 498**
**US-A-3 096 150**

(73) Patentinhaber: **Lentia Gesellschaft mit beschränkter Haftung, Schwanthalerstrasse 39 Postfach 20 16 26, D-8000 München 2 (DE)**

(72) Erfinder: **Schmidt, Alfred, Dr., Pacassistrasse 29, A-1130 Wien (AT)**
Erfinder: **Tschebull, Wilhelm, Dipl.Ing.Dr., Carl Boschweg 11, A-4020 Linz (AT)**

Verfahren zur kontinuierlichen Herstellung von Aluminiumfluorid

Die vorliegende Erfindung betrifft ein Verfahren zur kontinuierlichen Herstellung von Aluminiumfluorid aus Aluminiumhydroxyd und Kieselfluorwasserstoffsäure in wäßriger Lösung, bei welchem die bisher üblichen langen Kristallisationszeiten für das Aluminiumfluorid nach dem Abfiltrieren der ausgeschiedenen Kieselsäure entfallen.

Die Umgebung der in jeder Beziehung aufwendigen und eine kontinuierliche Verfahrensführung stark behindernden Kristallisationsstufe bei der Gewinnung von Aluminiumfluorid aus seinen wäßrigen Lösungen wurde bereits versucht. Sie ist z. B. Gegenstand der DE-A-529 602 aus dem Jahre 1929.

Nach diesem Verfahren wird, ausgehend von Tonerdehydrat und Fluorwasserstoffsäure, eine aluminiumfluoridhältige Lösung in einen Drehrohrofen abgelassen und die Kristallisation, die Entfernung der Hauptmenge des Wassers und die Calcination des Aluminiumfluorids bis zur praktischen Kristallwasserfreiheit in einem Arbeitsgang erledigt. Mangels definierter Verdampfungs-, Trocknungs- und Calcinationsbedingungen erhält man ein in Brocken anfallendes, den heutigen Anforderungen nicht mehr entsprechendes Endprodukt mit einem Reinheitsgrad von nur 93 Gew.-%.

Aus der US-A-3 385 685 (1968) ist ferner die kontinuierliche Herstellung von Aluminiumfluorid-hydrat aus Aluminiumhydroxyd und Fluorwasserstoff bekannt, wobei das Reaktionsgemisch auf ein bewegtes Bett von Aluminiumfluoridgranalien bei erhöhter Temperatur aufgetragen wird. Wesentlich ist, daß dabei im Reaktionsgemisch eine HF-Konzentration von 50—80% aufrechterhalten wird. Diese hohe HF-Konzentration kann nur durch Einsatz entsprechend hochkonzentrierter Fluorwasserstoffsäure erzielt werden, was das Verfahren sehr aufwendig macht.

Ein weiteres modernes Verfahren geht gleichfalls von Aluminiumhydroxyd und Fluorwasserstoffsäure aus, wobei unter Umgebung einer wäßrigen Reaktionsphase in einem zweistufigen Wirbelschichtverfahren aus Al(OH)$_3$ zunächst Al$_2$O$_3$ hergestellt und daraus bei Temperaturen von 400—600°C in einer HF-Atmosphäre wasserfreies AlF$_3$ erhalten wird. (Chem. Ing. Techn. 48 Jahrg. 1976, Nr. 4, S. 341). Aber auch hier sind trotz der kontrollierbaren Versuchsbedingungen Produktqualitäten von mehr als 90 bis 92 Gew.-% AlF$_3$, wie angegeben wird, nicht zu erhalten. Hingegen ist kein Verfahren bekannt, bei dem eine aus der Umsetzung von Kieselfluorwasserstoffsäure mit Aluminiumhydroxyd stammende Lösung unter Umgebung der wäßrigen Kristallisationsstufe zu Aluminiumfluorid verarbeitet wird, da hier die Notwendigkeit der Abtrennung der Kieselsäure und der verbleibende Si-Gehalt der Lösung als weiteres Erschwernis hinzukommt.

Gegenstand der GB-A-1 283 498 ist ein Verfahren zur Herstellung von wasserarmem Aluminiumfluorid aus wäßrigen Lösungen, wobei man durch Auskristallisieren bei Temperaturen zwischen 120 und 200°C und Drucken zwischen 2 und 16 at die Kristallisationszeiten erheblich d. h. bis auf 30 Minuten senken kann. Allerdings ist der erforderliche Energieaufwand beträchtlich und die erreichbaren Kristallisationszeiten für ein kontinuierliches Verfahren immer noch zu hoch.

Überraschenderweise konnte nun gefunden werden, daß sich eine aus einer Umsetzung von Aluminiumhydroxyd mit Kieselfluorwasserstoffsäure stammende Aluminiumfluoridlösung unter Umgehung der bekannt langwierigen Kristallisationsstufe direkt und in quantitativer Ausbeute zu einem Aluminiumfluorid verarbeiten läßt, das sowohl hinsichtlich AlF$_3$-Gehalt als auch Si-Gehalt den Spezifikationen (AlF$_3$-Gehalt mindestens 96 Gew.-%, SiO$_2$-Gehalt unter 0,2 Gew.-%) entspricht, wenn man die Lösung nach Abtrennung der Kieselsäure durch Versprühen rasch verdampft und gleichzeitig für einen gewissen Fluorwasserstoffgehalt in der zu versprühenden Lösung sorgt. Das Gelingen dieser raschen Trocknung durch Versprühen war für den Fachmann nicht vorherzusehen, da einmal bekannt ist, daß die große Verzögerung der Kristallisation des AlF$_3 \cdot$ 3 H$_2$O darauf zurückzuführen ist, daß sich einer Zeitreaktion Aluminiumfluorid in der Lösung erst aus einer Reihe löslicher Al-F-Verbindungen bilden muß (Chem. Ing. Technik 39, 1967, 522) und außerdem der Hauptteil des Si-Gehaltes der Lösung auf einen Aluminiumfluorosilikatgehalt zurückzuführen ist, dessen glatte Entfernbarkeit nicht zu erwarten war.

Gegenstand der Erfindung ist somit ein Verfahren zur kontinuierlichen Herstellung von praktisch reinem, festem kristallwasserhältigem Aluminiumfluorid eines AlF$_3$-Gehaltes von mindestens 96 Gew.-% bezogen auf das wasserfreie Produkt aus wäßrigen Reaktionslösungen durch Umsetzung von Aluminiumhydroxyd mit Kieselfluorwasserstoffsäure, anschließender Abtrennung der ausgefallenen Kieselsäure und Verdampfung, welches dadurch gekennzeichnet ist, daß die Lösung noch vor dem Kristallisationsbeginn des Aluminiumfluorids bei Produkttemperaturen von 110—350°C gegebenenfalls unter Verwendung von Aluminiumfluoridpartikeln als Wärmeüberträger versprüht wird, wobei der Lösung vor dem Sprühvorgang Fluorwasserstoffsäure in einer Menge von 0,1—1 Gew.-% HF bezogen auf die ursprüngliche AlF$_3$-haltige Lösung zugegeben wird.

Die Wahl der Reaktionstemperatur innerhalb der erfindungsgemäßen Grenzen richtet sich nach dem erwünschten Wassergehalt des Endproduktes. Will man die nachfolgende Calcination stark entlasten, empfiehlt es sich, bei Temperaturen von beispielsweise 250—300°C zu arbeiten, wodurch der Wassergehalt auf rund 5 Gew.-% abgesenkt werden kann. Kann ein höherer Wassergehalt von z. B. 10—15 Gew.-% toleriert werden, so wird die Produkttemperatur zweckmäßig etwas tiefer gewählt, vor allem dann, wenn man von verdünnteren Ausgangslösungen ausgeht, da sonst manchmal feinkörnigere Anteile in größerem Ausmaß entstehen.

Besonders hoher AlF$_3$-Gehalt und gute Kornverteilung wird bei der Einhaltung einer Produkttemperatur von 100—200° C erzielt. Zweckmäßiger- aber nicht notwendigerweise wird ein Teil des Wassers der aluminiumfluoridhältigen Lösung vor dem erfindungsgemäßen Eindampfprozeß bei Temperaturen zwischen 30 und 70° C im Vakuum entfernt, wobei kein Aluminiumfluorid auskristallisiert. Es hat sich nämlich gezeigt, daß der in der erfindungsgemäßen Eindampfstufe unter Normaldruck entfernte Wasserdampf je nach Eindampftemperatur die Bildung von sehr feinteiligem Aluminiumfluorid fördert, was unter Umständen nicht erwünscht ist. Im übrigen bedeutet die Maßnahme einer vorhergehenden Vakuumeindampfung im Vergleich zu den üblichen Kristallisations- und Filtrationsstufen einen geringeren apparativen Aufwand.

Erfindungsgemäß werden der aluminiumfluoridhältigen Lösung vor dem Sprühvorgang Fluorwasserstoffsäure in den üblichen wäßrigen Lösungen in einer Menge von 0,1—1 Gew.-%, vorzugsweise 0,1—0,5 Gew.-% HF, bezogen auf die ursprüngliche aluminiumfluoridhältige wäßrige Lösung, zugesetzt, um den »SiO$_2$-Gehalt« im Endprodukt unter das zulässige Höchstmaß, üblicherweise 0,2 Gew.-% SiO$_2$, zu senken. Auch diese Maßnahme bzw. der resultierende Effekt ist keineswegs naheliegend.

Der erfindungsgemäße Trocknungsvorgang kann und soll auch möglichst rasch erfolgen, z. B. durch Eindüsen in einen auf den erfindungsgemäßen Temperaturbereich erwärmten Luftstrom, wobei sich das feste Aluminiumfluorid in einem Zyklus abscheiden läßt. Man kann auch in Granuliereinrichtungen verschiedenster Ausführungen Aluminiumfluorid-Granalien als Wärmeüberträger verwenden, d. h. die aluminiumfluoridhältige Lösung wird auf die vorgelegten Granalien so aufgesprüht, daß die Ausbildung einer flüssigen Phase vermieden wird. Bewährt hat sich auch das Eindüsen der allenfalls vorher im Vakuum eingedampften aluminiumfluoridhältigen Lösung in eine Wirbelschicht aus feinteiligem, im erfindungsgemäßen Verfahren hergestellten Aluminiumfluorid.

Was den Gehalt des Endproduktes an anderen Verunreinigungen wie »P$_2$O$_5$« oder »Fe« betrifft, ergeben sich deshalb keinerlei Probleme, weil wäßrige Kieselfluorwasserstoffsäurelösungen auch großtechnisch ausreichend rein erhältlich sind. (Fe$_2$O$_3$ etwa 70 mg/l, P$_2$O$_5$ unter 50 mg/l). Zusätzliche Vorteile des erfindungsgemäßen Verfahrens sind seine kontinuierliche Durchführbarkeit, die dadurch sehr erleichtert wird, daß die für das Aluminiumfluorid-Trihydrat kennzeichnenden Verkrustungsprobleme umgangen werden, und ferner, daß das in der Lösung befindliche Aluminiumfluorid quantitativ gewonnen wird, was besonders dann einen großen Vorteil darstellt, wenn eine stark chloridhältige H$_2$SiF$_6$ verwendet wird, bei der üblicherweise nur eine geringere Ausbeute an AlF$_3$ erzielbar ist.

Die nachfolgenden Beispiele sollen das erfindungsgemäße Verfahren näher erläutern.

### Beispiel 1

Durch Aufschluß von Aluminiumhydroxid mit stöchiometrischen Mengen technischer Kieselflußsäure (45 ppm P$_2$O$_5$, 10 g/l Cl$^-$, 15,3 Gew.-% F) und Filtration der Fällungskieselsäure wurde zunächst eine Aluminiumfluoridlösung hergestellt, die 20,5 Gew.-% AlF$_3$ und 0,1 Gew.-% SiO$_2$ enthielt. Diese Lösung wurde im Vakuum bei 40° C auf einen Gehalt von etwa 47 Gew.-% AlF$_3$ konzentriert, ohne daß festes Aluminiumfluorid gebildet worden wäre. Nach Zugabe von 0,27 Gew.-% HF in Form einer 40%igen Lösung, bezogen auf das Konzentrat, (0,2 Gew.-% HF bezogen auf die ursprüngliche AlF$_3$-Lösung) wurden 3820 Gew.-Teile dieses Konzentrates in einer außenbeheizten Paddelrührschnecke auf 1700 Gew.-Teile/h vorgelegtes granuliertes Aluminiumfluoridhydrat (15 Gew.-% Glühverlust) kontinuierlich so aufgesprüht, daß die so eingebrachte Wassermenge sofort verdampfte. Durch Regelung der Außenheizung wurde eine Temperatur des Aluminiumfluorids in der Paddelschnecke von 110° C eingestellt. Am Ausgang der Schnecke erhielt man 3900 Gew.-Teile/h Aluminiumfluoridhydratgranulat mit 16,5 Gew.-% Glühverlust, d. h. daß 99,8 Gew.-% des eingebrachten Aluminiumfluorids im Granulat gefunden wurden. In der Gasabsaugung konnten gleichzeitig nur geringe Mengen Feinstaub gefunden werden. Ein Anteil des Granulates wurde nach teilweiser Zerkleinerung in die Schnecke zurückgeführt. Der andere Teil wurde in einem indirekt beheizten Drehrohr bei 550° C zu wasserfreiem AlF$_3$ calciniert. Das in einheitlicher Korngröße (0,25—0,8 mm) anfallende Aluminiumfluorid enthielt bei einem Glühverlust von 0,4 Gew.-% 97,3 Gew.-% AlF$_3$, 0,02 Gew.-% Cl, 0,02 Gew.-% P$_2$O$_5$ und unter 0,2 Gew.-% SiO$_2$.

### Beispiel 2

Eine wie im Beispiel 1 hergestellte Aluminiumfluoridlösung wurde nach Zugabe von 0,12 Gew.-% HF in Form einer 40%igen Lösung ohne vorherige Konzentrierung direkt in der oben beschriebenen Weise bei 100° C auf vorgelegtes AlF$_3$-Granulat aufgesprüht und eingedampft. Dabei wurden etwa 7 Gew.-% des eingebrachten Aluminiumfluorids als Staub in der Gasabsaugungsanlage wiedergefunden. Der Anteil des AlF$_3$ im Granulat betrug somit 93 Gew.-%, die Qualität des calcinierenden AlF$_3$ ist die gleiche wie oben.

## Beispiel 3

Eine wie in Beispiel 1 hergestellte AlF₃-Lösung wurde nach Zugabe von 0,12 Gew.-% HF in Form einer 40%igen Lösung in der oben beschriebenen Weise ohne vorhergehende Konzentrierung bei 200°C auf vorgelegtes AlF₃-Granulat aufgesprüht und eingedampft. Bei gleicher Qualität des calcinierten AlF₃ betrug der Anteil an AlF₃ im Granulat nur 70 Gew.-%, der restliche Teil wurde in sehr feinteiliger Form (5—30 μm) in der Gasabsaugung abgeschieden. Er kann in die Granulierstufe zurückgeführt oder als Wärmeüberträger in einer Wirbelschicht eingesetzt werden.

## Beispiel 4

Eine durch Aufschluß von Aluminiumhydroxid mit technischer H₂SiF₆ (2% stöchiometrischer Überschuß an H₂SiF₆) und Filtration der Fällungskieselsäure hergestellte AlF₃-Lösung enthält 21 Gew.-% AlF₃ und 2,6 g SiO₂/l. Nach Zusatz von 0,4 Gew.-% HF in Form einer 40%igen Lösung wurden 100 Gew.-Teile dieser Lösung unter stetigem Granulieren auf 50 Gew.-Teile grobkristallinem AlF₃-Hydrat (mit 0,1 Gew.-% SiO₂) aufgesprüht, wobei durch eine Gas-Außenbeheizung eine Temperatur von 150°C im Produkt eingehalten wurde. Das so hergestellte AlF₃-Hydrat zeigte einen Glühverlust von 9,8 Gew.-% und enthielt nach dem Calcinieren auf 550°C 97,2 Gew.-% AlF₃ und 0,2 Gew.-% SiO₂.

Ein in gleicher Weise hergestelltes AlF₃ enthielt bei Zusatz von 0,12 Gew.-% HF in Form einer 40%igen Lösung nach dem Calcinieren noch 0,24 Gew.-% SiO₂.

## Beispiel 5

Eine durch Aufschluß von Al(OH)₃ mit technischer H₂SiF₆ (2%iger stöchiometrischer Überschuß an H₂SiF₆) und Filtration der Fällungskieselsäure hergestellte AlF₃-Lösung enthält 21 Gew.-% AlF₃ und 2,6 g SiO₂/l. Nach Zusatz von 0,4 Gew.-% HF in Form einer wäßrigen Lösung wurden 200 Gew.-Teile der AlF₃-Lösung unter stetigem Granulieren auf 50 Gew.-Teile grobkristallinem AlF₃-Hydrat (mit 0,1 Gew.-% SiO₂) aufgesprüht, wobei durch eine Gasaußenbeheizung eine Temperatur von 300°C im Produkt eingehalten wurde. Das so hergestellte AlF₃-Hydrat zeigte einen Glühverlust von 4,7 Gew.-% und enthielt nach dem Calcinieren auf 550°C 96,5 Gew.-% AlF₃ und 0,11 Gew.-% SiO₂.

## Beispiel 6

Eine AlF₃-Lösung, hergestellt aus Al(OH)₃ und einer H₂SiF₆-Lösung enthält 248 g/l AlF₃, 56 mg/l P₂O₅ und 1,04 g/l SiO₂. 1,4 l/h dieser Lösung wurde nach Zusatz von 0,15 Gew.-% HF in Form einer 40%igen wäßrigen Lösung durch Verdüsung in einem Luftstrom (10 Nm³/h) von 540°C Eintrittstemperatur und 140°C Austrittstemperatur getrocknet und das 140° heiße Produkt anschließend in einem Zyklon abgeschieden. Es enthält 19,4 Gew.-% H₂O. Nach einer weiteren Kalzination bei 600°C in einer Wirbelschicht enthielt das Produkt 98,1 Gew.-% AlF₃ und 0,02 Gew.-% P₂O₅. Der SiO₂-Gehalt betrug 0,2 Gew.-%.

## Beispiel 7

1,0 l/h einer Aluminiumfluoridlösung mit einem Gehalt von 20,5 Gew.-% AlF₃ und 0,1 Gew.-% SiO₂, wurden nach Zusatz von 0,15 Gew.-% HF in Form einer 40%igen wäßrigen Lösung mit Hilfe einer Zweistoffdüse mit Luft in eine Wirbelschicht von 200 mm Durchmesser und 150 mm Höhe aus Aluminiumfluorid-Hydrat eingesprüht. Die Temperatur der Wirbelschichte betrug 150°C, die erforderliche Wärme wurde durch eine elektrische Außenbeheizung zugeführt. Der Stand der Wirbelschicht wurde durch einen Überlauf konstant gehalten. Die Abgase der Schicht wurden über ein Zyklon geleitet, das dort abgeschiedene feste Produkt in die Wirbelschichte zurückgeführt.

Je Stunde konnten 295 g Produkt gewonnen werden, das einen Wassergehalt von 18,2 Gew.-% aufwies. Nach einer Kalzination des Produktes in einer Wirbelschichte bei 600°C enthielt es 99,2 Gew.-% AlF₃ · Der SiO₂-Gehalt betrug 0,2 Gew.-%.

## Patentansprüche

1. Verfahren zur kontinuierlichen Herstellung von praktisch reinem, festem, kristallwasserhältigem Aluminiumfluorid eines AlF₃-Gehaltes von mindestens 96 Gew.-%, bezogen auf das wasserfreie Produkt aus wäßrigen Reaktionslösungen durch Umsetzung von Aluminiumhydroxyd mit Kieselfluorwasserstoffsäure, anschließender Abtrennung der ausgefallenen Kieselsäure und Verdampfung, dadurch gekennzeichnet, daß die Lösung noch vor dem Kristallisationsbeginn des Aluminiumfluorids bei Produkttemperaturen von 110—350°C, gegebenenfalls unter Verwendung von Aluminiumfluoridpartikeln als Wärmeüberträger, versprüht wird, wobei der Lösung vor dem Sprühvorgang Fluorwasserstoffsäure in einer Menge von 0,1—1 Gew.-% HF, bezogen auf die ursprüngliche AlF₃-haltige Lösung zugegeben wird.

2. Verfahren nach Anspruch 1, dadurch gekennzeichnet, daß die Produkttemperatur zwischen 110—200°C beträgt.

3. Verfahren nach den Ansprüchen 1 und 2, dadurch gekennzeichnet, daß die Fluorwasserstoffsäure der aluminumfluoridhältigen Lösung nach dem Abfiltrieren der ausgeschiedenen Kieselsäure in einer Menge von 0,1—0,5 Gew.-%

HF, bezogen auf die ursprüngliche aluminiumfluoridhältige wäßrige Lösung, zugegeben wird.

4. Verfahren nach den Ansprüchen 1 bis 3, dadurch gekennzeichnet, daß der Versprühung eine Aluminiumfluoridlösung unterworfen wird, die nach dem Abfiltirieren der ausgeschiedenen Kieselsäure noch vor dem Ausscheiden des Aluminiumfluorides im Vakuum bei Temperaturen von 30 bis 70°C eingedampft worden ist, wobei die Fluorwasserstoffsäure nach dem Eindampfvorgang zugesetzt wird.

5. Verfahren nach den Ansprüchen 1 bis 4, dadurch gekennzeichnet, daß man die Versprühung der aluminiumfluoridhältigen Lösung in einer Granulierstufe vornimmt.

6. Verfahren nach den Ansprüchen 1 bis 4, dadurch gekennzeichnet, daß die Versprühung der aluminiumfluoridhältigen Lösung in einer Wirbelschichtstufe vorgenommen wird.

## Claims

1. Process for the continuous manufacture of virtually pure, solid aluminium fluoride containing water of crystallisation and with an $AlF_3$ content of at least 96% by weight, relative to the anhydrous product, from aqueous reaction solutions, by reacting aluminium hydroxide with fluosilicic acid, subsequently removing the precipitated silica and evaporating, characterised in that the solution is atomised before the start of crystallisation of the aluminium fluoride, at product temperatures of 110—350°C, optionally using aluminium fluoride particles as heat transfer agents, hydrofluoric acid in a quantity of 0.1—1% by weight of HF, relative to the original solution containing $AlF_3$, being added to the solution before the atomisation process.

2. Process according to Claim 1, characterised in that the product temperature is between 110 and 200°C.

3. Process according to Claims 1 and 2 characterised in that the hydrofluoric acid is added to the solution containing aluminium fluoride, after filtering off the precipitated silica, in a quantity of 0.1—0.5% by weight of HF, relative to the original aqueous solution containing aluminium fluoride.

4. Process according to Claims 1 to 3, characterised in that an aluminium fluoride solution which, after the precipitated silica has been filtered off and before the aluminium fluoride separates out, has been evaporated in vacuo, at temperatures of 30 to 70°C, is subjected to atomisation, the hydrofluoric acid being added after the evaporation process.

5. Process according to Claims 1 to 4, characterised in that the atomisation of the solution containing aluminium fluoride is carried out in a granulation stage.

6. Process according to Claims 1 to 4, characterised in that the atomisation of the solution containing aluminium fluoride ist carried out in a fluidised bed stage.

## Revendications

1. Procédé pour la production en continu de fluorure d'aluminium pratiquement pur, solide et contenant de l'eau de cristallisation, ayant une teneur en $AlF_3$ d'au moins 96% en poids sur la base du produit anhydre, à partir de solutions réactionelles aqueuses, par réaction d'hydroxyde d'aluminium avec de l'acide hydrofluosilicique, puis séparation de l'acide silicique précipité et vaporisation, caractérisé en ce qu'on pulvérise la solution, encore avant le début de cristallisation du fluorure d'aluminium, à des températures du produit de 110 à 350°C, le cas échéant en utilisant des particules de fluorure d'aluminium comme véhicule thermique, en ajoutant á la solution, avant l'opération de pulvérisation, de l'acide fluorhydrique selon une quantité de 0,1 à 1% en poids d'HF sur la base de la solution initiale contenant $AlF_3$.

2. Procédé suivant la revendication 1, caractérisé en ce que la température du produit est comprise entre 110 et 200°C.

3. Procédé suivant les revendications 1 et 2, caractérisé en ce que l'acide fluorhydrique est ajouté à la solution contenant le fluorure d'aluminium après élimination par filtration de l'acide silicique séparé, selon une quantité de 0,1 à 0,5% en poids d'HF sur la base de la solution aqueuse initiale contenant le fluorure d'aluminium.

4. Procédé suivant l'une quelconque des revendications 1 à 3, caractérisé en ce qu'on soumet à la pulvérisation une solution de fluorure d'aluminium qui, après élimination par filtration de l'acide silicique séparé, a été concentrée par évaporation encore avant la séparation du fluorure d'aluminium, en opérant sous vide à des températures de 30 à 70°C, l'acide fluorhydrique étant ajouté après l'opération de concentration par évaporation.

5. Procédé suivant l'une quelconque des revendications 1 à 4, caractérisé en ce qu'on effectue la pulvérisation de la solution contenant le fluorure d'aluminium au cours d'un stade de granulation.

6. Procédé suivant l'une quelconque des revendications 1 à 4, caractérisé en ce qu'on effectue la pulvérisation de la solution contenant le fluorure d'aluminium dans un lit fluidisé.